(19) Europäisches Patentamt
European Patent Office
Office européen des brevets

(11) **EP 4 553 454 A1**

(12) **EUROPEAN PATENT APPLICATION**

(43) Date of publication:
**14.05.2025 Bulletin 2025/20**

(21) Application number: **23275159.4**

(22) Date of filing: **10.11.2023**

(51) International Patent Classification (IPC):
**G01D 5/20** (2006.01)    **G01D 5/244** (2006.01)

(52) Cooperative Patent Classification (CPC):
**G01D 5/2053; G01D 5/24438; G01D 5/24485;**
G01D 2205/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Renishaw PLC
Wotton-under-Edge, Gloucestershire GL12 8JR
(GB)**

(72) Inventor: **The designation of the inventor has not
yet been filed**

(74) Representative: **Rolfe, Edward William et al
Patent Department
Renishaw plc
New Mills
Wotton-under-Edge
Gloucestershire GL12 8JR (GB)**

(54) **APPARATUS COMPRISING AN INDUCTIVE ROTARY ENCODER**

(57)    An apparatus comprising an inductive rotary encoder comprising first and second members relatively rotatable about an axis of rotation, the first member having at least first, second and third scale tracks, and the second member having at least one excitation coil for generating a magnetic field, the second member also having a first receiver coil arranged to sense a magnetic field as manipulated by the first scale track, a second receiver coil arranged to sense a magnetic field as manipulated by the second scale track, and a third receiver coil arranged to sense a magnetic field as manipulated by the third scale track, configured such that at least three separate signal channels can be derived from said at least first, second and third receiver coils, wherein the signals of the at least three separate signal channels vary periodically with relative rotation of the first and second members about the axis of rotation, and configured such that for each angle of relative rotation of the first and second members about the axis of rotation, the signal phases of the at least three separate signal channels have a unique combination.

Figure 4

EP 4 553 454 A1

**Description**

The present invention relates to an inductive rotary encoder.

Inductive rotary encoders are known and typically comprise: i) a rotor for mounting to a part of a machine such as a shaft that is rotatable relative to a static part of the machine about an axis; and ii) a stator for mounting to the static part of a machine. Typically, the stator is an active/powered component and comprises transmit (or "excitation") and receiver coils (and associated electronics) for creating and sensing an alternating electromagnetic field. Typically, the rotor is a passive/unpowered component comprising scale features which manipulate the electromagnetic field sensed by the stator's sensor coils such that the output(s) of the stator's receiver coil(s) are dependent on the relative rotational orientation of the stator and rotor about the axis. Accordingly, the relative rotational position (and/or derivatives thereof) of the stator and rotor (and hence of the static and rotational parts of the machine) can be measured from the output(s) of the stator's receiver coil(s).

The present invention relates to improvements in connection with inductive rotary encoders.

According to a first aspect of the invention there is provided an apparatus comprising an inductive rotary encoder comprising first and second members relatively rotatable about an axis of rotation, the first member having at least first, second and third scale tracks, and the second member having at least one excitation coil for generating a magnetic field, the second member also having a first receiver coil arranged to sense a magnetic field as manipulated by the first scale track, a second receiver coil arranged to sense a magnetic field as manipulated by the second scale track, and a third receiver coil arranged to sense a magnetic field as manipulated by the third scale track, configured such that at least three separate signal channels can be derived from said at least first, second and third receiver coils, the signals of which vary periodically with relative rotation of the first and second members about the axis of rotation, and configured such that for each angle of relative rotation of the first and second members about the axis of rotation, the signal phases of the at least three separate signal channels have a unique combination.

As will be understood, the apparatus (e.g. the inductive rotary encoder) can be configured to determine from the signals of the at least three separate signal channels, the rotational position of the first and second members about the axis of rotation, and/or a derivative thereof (such as velocity and/or acceleration). In particular, because the signal phases of the at least three separate signal channels have a unique combination for each angle of relative rotation of the first and second members about the axis of rotation, the signal phases of the at least three separate signal channels can be used to determine an absolute relative rotational position, and/or a derivative thereof, of the first and second members,

about the axis of rotation. Accordingly, the apparatus (e.g. the inductive rotary encoder) can be configured to determine from the signals of the at least three separate signal channels, an absolute relative rotational position, and/or a derivative thereof, of the first and second members, about the axis of rotation.

For example, the apparatus (e.g. the inductive rotary encoder) can be configured: i) to take the output (e.g. phase value) of the first receiver coil, and then, for each of the scale periods of the first scale track, identify what output (e.g. phase values) you would expect from the second and third receiver coils. The apparatus (e.g. the inductive rotary encoder) can be further configured to ii) compare the expected outputs with the actual outputs, check if they match, and record the result. The apparatus (e.g. the inductive rotary encoder) can be further configured to determine if there is only one match, and if so then that matched position is used/output as the absolute relative rotational position. If there are no matches, or more than one match, an error state can be recorded and/or output.

Accordingly, the apparatus, e.g. the inductive rotary encoder, can comprise means for determining from the at least three separate signal channels information concerning the (e.g. absolute) rotational position, and/or a derivative thereof, of the first and second members about the axis of rotation. Such means can comprise one or more "processing" or "processor" devices. This could be referred to as a position calculator.

As will be understood, a "processing" or "processor" device or "position calculator" can comprise a bespoke processing device configured for the specific application (e.g. a field programmable gate array "FPGA") as well as a more generic processing device which can be programmed (e.g. via software) in accordance with the needs of the application in which it is used. Accordingly, a suitable "processing" or "processor" device or "position calculator" can comprise, for example, a CPU (Central Processor Unit), FPGA (Field Programmable Gate Array), or ASIC (Application Specific Integrated Circuit), or the like.

The means, e.g. the "processing" or "processor" device, could be provided as part of the inductive rotary encoder (in which case, the apparatus could comprise just the inductive rotary encoder). For example, such means could be provided as part of one of the first or second members (in which case, preferably the second member). But this doesn't necessarily have to be the case and the inductive rotary encoder could comprise a separate component which comprise said means (e.g. one or more "processing" or "processor" devices) for determining from the at least three separate signal channels, information concerning the rotational position, and/or a derivative thereof, of the first and second members about the axis of rotation. For instance, the inductive rotary encoder could comprise said first and second members and a separate interface unit comprising said means.

The means (e.g. one or more "processing" or "processor" devices) for determining from the receiver coil, information concerning the rotational position, and/or a derivative thereof, of the first and second members about the axis of rotation could be provided separately to the inductive rotary encoder, e.g. in a controller device separate to the inductive rotary encoder. Accordingly, for example, the apparatus could comprise a controller comprising said "processing" or "processor" device.

Said controller could be the controller of a machine on which the inductive rotary encoder is, or is to be, mounted. Accordingly, for example, the apparatus can comprise a machine on which the inductive rotary encoder is, or is to be, mounted.

Accordingly, the determining of the rotational position of the first and second members about the axis of rotation, may or may not be performed by the inductive rotary encoder apparatus itself.

As will be understood, said means for determining the rotational position of the first and second members about the axis of rotation, and/or a derivative thereof (such as velocity and/or acceleration) could be shared/split across the inductive rotary encoder and another device (e.g. machine controller) that is separate to the inductive rotary encoder.

As will be understood, the "signal phases" of the signal channels means the phase component of the signal channel. As will be understood, the first, second and third signal channels can have different (e.g. spatial) periods to each other.

An at least three signal channel configuration of the present invention can provide various benefits over a single or two signal channel system. For instance, compared to a two-channel system, a three-channel system provides a greater tolerance of angle error in the output of the channels (e.g. the lower period channels), without necessarily sacrificing accuracy performance. This in turn provides the manufacturer with the option of simplifying and reducing the cost of the inductive rotary encoder. For instance, for all other things being equal, a three-channel system in accordance with the present invention can provide the same (or even superior performance) than a two-channel system with smaller components (e.g. smaller receiver coils, smaller scale track features) and/or less/simpler/cheaper or even no (e.g. dynamic) signal correction of one or more of the channels. Also, the greater error tolerance allows a high number of incremental periods per revolution to be used and hence more accurate large diameter encoders are possible.

For instance, in accordance with a preferred embodiment of the invention, the apparatus (e.g. the inductive rotary encoder) can be configured such that one of the receiver coils (e.g. the "first" receiver coil) (which could be referred to as the "Incremental receiver coil") is configured such that its output inherently has a larger amplitude and/or higher quality signal than that of the other (e.g. second and/or third) receiver coils (which could be referred to as a "first Vernier receiver coil" and "a second Vernier receiver coil"). For instance, this could be due to one or more characteristics of the respective scale tracks (such as their size/quality) and/or due to one or more characteristics of the respective receiver coils (such as their size/quality). The quality of the signal can refer to the signal to noise ratio, for instance.

For example, in accordance with a preferred embodiment of the invention, the size of the first/Incremental receiver coil is larger than that of the second and third (first Vernier and second Vernier) receiver coils. "Size" can refer to the radial size/amplitude (i.e. their width/amplitude as measured in the radial dimension). For instance, it can be preferred that the radial width or "coil amplitude" of the first/Incremental receiver coil is at least 25% larger than that of the second and third (first Vernier and second Vernier) receiver coils, more preferably at least 50% larger than that of the second and third (first Vernier and second Vernier) receiver coils, especially preferably at least 100% larger than that of the second and third (first Vernier and second Vernier) receiver coils (i.e. at least double that of the second and third (first Vernier and second Vernier) receiver coils).

"Size" can also/alternatively refer to the diameter of the receiver coil. For instance, it can be preferred, e.g. for signal amplitude and/or quality reasons, that the diameter of the first/Incremental receiver coil is larger than that of the second and third (first Vernier and second Vernier) receiver coils. That is, it can be preferred that the first/Incremental receiver coil is radially outside of the second and third (first Vernier and second Vernier) receiver coils. Furthermore, the width (as measured in the radial dimension) of the first scale track (which could be referred to as the "Incremental scale track") could be greater than that of the second and/or third scale tracks (which could be referred to as the "first Vernier scale track" and "second Vernier scale track").

The apparatus (e.g. the inductive rotary encoder) could be configured such that one or more types of automatic/dynamic signal correction is applied to the output to the first/Incremental receiver coil. Types of automatic/dynamic signal correction include, but is not limited to: i) automatic/dynamic gain correction (AGC), ii) automatic/dynamic offset correction (AOC), iii) automatic/dynamic balance correction (ABC), and iv) automatic/dynamic phase correction (APC). A benefit of the present invention can be that any or all such automatic/dynamic signal correction is less important (and can be unnecessary) for the output of the other receiver coils (e.g. the first and second Vernier receiver coils). Accordingly, in particularly preferred embodiments of the invention, fewer types of automatic/dynamic signal correction are applied to the output of the second and third (e.g. the first and second Vernier) receiver coils, compared to that applied to the output of the first/Incremental receiver coil. For instance, at least one type of automatic/dynamic signal correction is applied to the output to the first/Incremental receiver coil and no automatic/dynamic signal correction is applied to the output of the second and third (e.g. the first and second Vernier) receiver coils).

Separate/different excitation coils could be used to generate the magnetic fields manipulated by the different scale tracks and sensed by the different receiver coils. For instance, a first excitation coil could be used to generate the magnetic field manipulated by the first scale track and sensed by the first receiver coil, a second excitation coil could be used to generate the magnetic field manipulated by the second scale track and sensed by the second receiver coil, and a third excitation coil could be used to generate the magnetic field manipulated by the third scale track and sensed by the third receiver coil. In preferred embodiments the same excitation coil(s) is (are) used to generate the magnetic field manipulated by two or more of the scale tracks and as sensed by two or more of the receiver coils. For instance, in a preferred embodiment, one excitation coil is used to generate a magnetic field that is manipulated by each of the first, second and third scale tracks (wherein the first receiver coil is arranged to sense the magnetic field as manipulated by the first scale track, the second receiver coil is arranged to sense the magnetic field as manipulated by the second scale track, and the third receiver coil is arranged to sense the magnetic field as manipulated by the third scale track).

A scale track can comprise a series, e.g. an array, of conductive/non-conductive scale features. A scale track can comprise a periodic arrangement of scale features. Accordingly, a scale track can comprise a periodic arrangement of conductive/non-conductive scale features. The periods of the first, second and third scale tracks can be different to each other. Preferably, the first, second and third scale tracks are configured such that the only common integer factor of the period count (in other words, "feature count", or "line count") of said first, second and third scale tracks is 1.

The scale track having the highest number of periods per revolution could be referred to as the "incremental scale track" and the remaining scale tracks being referred to as "vernier scale tracks".

In a preferred embodiment, all of the first, second and third scale tracks are centred on and extend annularly around a (i.e. the same) scale track axis (a "first axis", or "first member axis"). The at least one excitation coil could be centred on and extend annularly around an excitation coil axis. In a preferred embodiment, all of the first, second and third receiver coils are centred on and extend annularly around a (i.e. the same) receiver coil axis. In a preferred embodiment all of the excitation coil(s) and the first, second and third receiver coils are centred on and extend annularly around a (i.e. the same) axis (a "second axis" or "second member axis") (i.e. the excitation coil axis and receiver coil axis can be substantially coincident). For example, the excitation and receiver coils could be formed with a substantially concentric configuration on the second member.

As will be understood, typically, and in preferred embodiments of the invention, the inductive rotary encoder is configured such that, in use, it is intended/configured to be arranged such that all of said axes (i.e. the scale track (e.g. first/first member) axis, excitation and receiver axes (e.g. second/second member axis) and the axis of rotation) are substantially parallel to each other (at least to the extent such that during operation the first and second members do not physically come into contact with each other). As will be understood, the actual desired degree of parallelism will depend on various aspects of the inductive rotary encoder, such as its dimensions and the desired level of accuracy. Nevertheless, typically it will be desired that the angle between any of the scale track axis, the excitation and the receiver coil axes (e.g. the angle between the first/first member and second/second member axes) is not more than 5°, more preferably not more than 3°, especially preferably not more than 2°, and for instance not more than 1°. Also, typically it will be desired that the angle between i) any of the scale track axis, the excitation axis and the receiver coil axis, and ii) the axis of rotation, is not more than 5°, more preferably not more than 3°, especially preferably not more than 2°, and for instance not more than 1°.

In preferred embodiments, the inductive rotary encoder is configured such that, in use, it is intended/configured to be arranged such that all of said axes (i.e. the scale track (e.g. first/first member) axis, excitation and receiver axes (e.g. second/second member axis) and the axis of rotation can be (e.g. are) substantially coincident (e.g. offset from each other by not more than 10% of the diameter of the receiver coil, more preferably by not more than 5% of the diameter of the receiver coil).

As will be understood, another commonly used term in the field of inductive encoders for "excitation coil" is "transmit coil". Accordingly, the term "transmit coil" could be used in place of the term "excitation coil" herein.

The at least first, second and third scale tracks can have different radial positions/different radii on the first member. The at least first, second and third receiver coils can have different radial positions/different radii on the second member.

Typically, in use, the first member will be mounted on a rotating part of a machine and the second member will be mounted on a static part of machine (accordingly the first member could be referred to as a "rotor" and the second member could be referred to as a "stator"). Nevertheless, as will be understood, this need not necessarily be the case and the members could be mounted the other way around, or both of the first and second members could be mounted on rotatable parts.

In preferred embodiments of the invention, the number of excitation coils is fewer than the number of scale tracks and/or the number of receiver coils. For instance, the second member could have only one excitation coil.

In preferred embodiments of the invention a receiver coil comprises a differential coil. In preferred embodiments of the invention, a receiver coil comprises a pair of phase-shifted coils, such that a receiver coil provides at least a pair of phase-shifted signals (e.g. SIN and COS signals). In particularly preferred embodiments of the invention, a receiver coil comprises a pair of phase-shifted coils. For example, a receiver coil comprises a SIN coil (providing a SIN signal) and a COS coil (providing a COS signal), each of which comprises a differential coil.

At least one of the first and second members can comprise a magnetic flux increaser within which a current flow is generated by the or another excitation coil's magnetic field, and which in turn itself generates a magnetic field which acts to increase, in the region of the receiver coil, the magnetic flux of the magnetic field sensed by the receiver coil.

Increasing the magnetic flux in the region of the receiver coil can help to increase the signal strength and/or system sensitivity, in turn leading to improved signal quality and/or accuracy of the measure of the relative position of the first and second members about the axis of rotation.

In a preferred embodiment, the excitation coil which generates the magnetic field which generates the current flow in the magnetic flux increaser is the same excitation coil which generates the magnetic field which is manipulated by the scale track and sensed by the receiver coil (and from which the relative rotational position of the first and second members about the axis of rotation can be measured).

In a preferred embodiment of the invention, the magnetic flux increaser comprises: at least one conductor located radially (e.g. with respect to the axis of rotation) outside of the first member's scale track and the second member's receiver and excitation coils, said at least one conductor being hereinafter referred to as at least one "outer" conductor; and/or at least one conductor located radially (e.g. with respect to the axis of rotation) inside of the first member's scale features and the second member's receiver and excitation coils, said at least one conductor being hereinafter referred to as at least one "inner" conductor.

In a particularly preferred embodiment of the invention, the magnetic flux increaser comprises both an outer and an inner conductor. In such an embodiment, the receiver and excitation coils could be located, in the radial dimension (e.g. with respect to the axis of rotation), between (in other words "radially between") the outer and inner conductors. Similarly, said at least one magnetic field sensor (from which said information about the relative arrangement of the first and second members in a degree of freedom other than about the axis of rotation, is determined) (e.g. said first and second set of magnetic field regions/sensors) could be located, in the radial dimension (e.g. with respect to the axis of rotation), between (in other words "radially between") the outer and inner conductors.

As will be understood (and as explained herein), the magnetic flux increaser (e.g. the inner conductor and/or outer conductor) need not necessarily be located within the same plane as the receiver and excitation coils, or indeed within the same plane as the scale track. For instance, in a preferred embodiment the magnetic flux increaser (e.g. at least one "outer" conductor and/or said at least one "inner" conductor) is provided on and located within the plane of the first member, and the receiver and excitation coils are provided on and located within the plane of the second member (the first and second members and their respective planes being axially offset, with respect to the axis of rotation, and therefore are not coplanar).

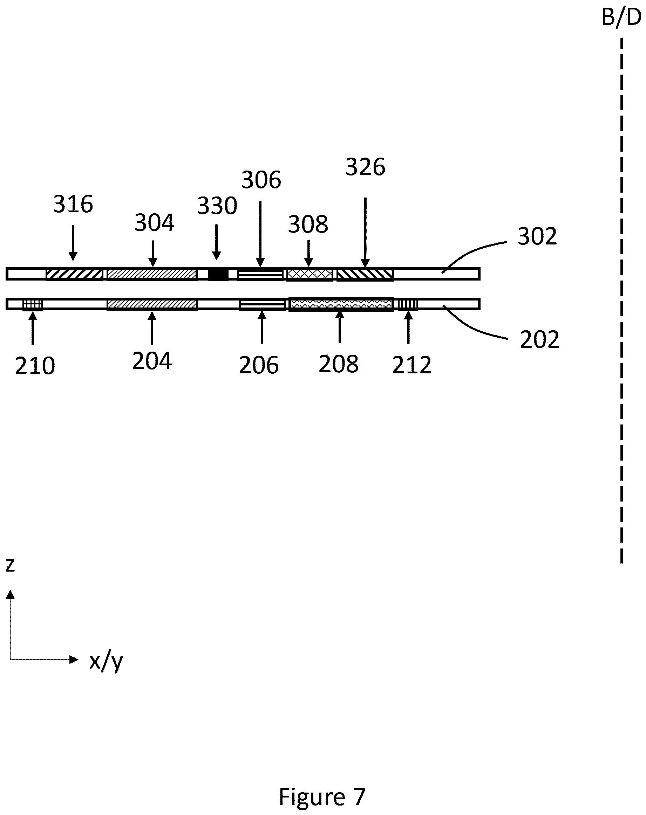

As will be understood, references herein to the magnetic flux increaser (e.g. the inner conductor and/or outer conductor) being located "radially" with respect to the scale track, and/or excitation coil, and/or receiver coil, and/or magnetic field sensor(s) (e.g. "radially outside", "radially inside", or "radially between") is not intended to limit the relative configuration/arrangement of such features in the axial dimension (with respect to the axis of rotation), but rather is intended only to serve as to indicate their relative configuration in the radial dimension (with respect to the axis of rotation). In other words, use of the terms "radially outside", "radially inside", or "radially between" is not intended to require the features referred to as being in the same plane as each other. For example, in an embodiment where the magnetic flux increaser comprises an "outer" closed annular loop conductor and "inner" closed annular loop conductor provided on and located within the plane of the first member, and where the receiver and excitation coils (and for example the at least one magnetic field sensor) are provided on and located within the plane of the second member which is axially offset with respect to the first member, the receiver and excitation coils (and at least one magnetic field sensor) can still be located "radially between" the "outer" closed annular loop conductor and "inner" closed annular loop conductor, by virtue of their respective radial positions and dimensions. Indeed, this is the situation illustrated in the embodiment described above in connection with the Figures, in particular see Figure 7.

In a preferred embodiment, the at least one scale track is centred on and extends annularly around a scale track axis and the at least one outer conductor, and/or the at least one inner conductor, are substantially centred on the scale track axis.

The at least one "outer" conductor can comprise a closed annular conductive loop. The "outer" conductor's closed annular conductive loop can be centred on and extend annularly around an "outer conductor axis".

The at least one "inner" conductor can comprise a closed annular conductive loop or conductive disc, centred on (and extend around) an "inner conductor axis".

In a preferred embodiment, the scale track axis, the outer conductor axis and the inner conductor axis are all substantially parallel to each other, and optionally are all substantially coincident. As will be understood, the inductive rotary encoder can be configured such that, in use, it is intended/configured to be arranged such that the scale track axis, the outer conductor axis, the inner conductor axis and the axis of rotation are all substantially parallel to each other, and optionally are all substantially coincident.

The apparatus (e.g. the inductive rotary encoder) can comprise at least one magnetic field sensor for sensing the magnetic field generated by the or another excitation coil, and the apparatus comprises means for determining from said at least one magnetic field sensor information about the relative arrangement of the first and second members in a degree of freedom other than about the axis of rotation. Using a magnetic field generated by an excitation coil can be an efficient and convenient way in which to determine information about the relative arrangement of the first and second members in a degree of freedom other than about the axis of rotation. Due to the rotary encoder being an inductive rotary encoder, it is already designed with components for generating magnetic fields from an excitation coil. Indeed, in preferred embodiments, the excitation coil which generates the magnetic field from which the information about the relative arrangement of the first and second members in a degree of freedom other than about the axis of rotation is determined, can be generated by the same excitation coil as that which generates the magnetic field which is sensed by the receiver coil via which the relative rotational position of the first and second members can be measured.

The information about the relative arrangement of the first and second members can comprise information about the separation (in particular, axial separation, e.g. as measured along the axis of rotation) of the first and second members. Such information could be referred to as "rideheight" information.

The information about the relative arrangement of the first and second members can comprise information about the relative tilt of the first and second members. Such tilt could be measured about an axis perpendicular to the axis of rotation. For example, in embodiments in which the first and second members are substantially planar members (or at least have substantially planar facing faces) the information about the relative arrangement of the first and second members can comprise a measure of how parallel the first and second members (or said faces thereof) are. The at least one scale track (e.g. the features thereof) could be contained in a first plane and the excitation and receiver coils could be contained in a second plane. In such a case, the information about the relative arrangement of the first and second members can comprise a measure of how parallel the first and second planes are.

The information about the relative arrangement of the first and second members can comprise information about the relative lateral (or "radial") position of the first and second members (in a direction perpendicular to the axis of rotation). For example, the information about the relative arrangement of the first and second members can comprise information about the relative eccentricity of the first and second members.

Typically, in use, the first member will be mounted on a rotating part of a machine and the second member will be mounted on a static part of machine (accordingly the first member could be referred to as a "rotor" and the second member could be referred to as a "stator"). For example, the apparatus can comprise a rotatable part (e.g. that is rotatable about the axis of rotation) on which the first member is mounted, and a static part on which the second member is mounted. Nevertheless, as will be understood, this need not necessarily be the case and the members could be mounted the other way around, or both of the first and second members could be mounted on rotatable parts. Accordingly, the apparatus can comprise first and second relatively rotatable parts (relatively rotatable about the axis of rotation) on which the first and second members around mounted.

The information about the relative arrangement of the first and second members in a degree of freedom other than about the axis of rotation can be used in a number of different ways, e.g. to benefit the operator installing the inductive rotary encoder and/or the system in which it is incorporated. For instance, such information could be used during the set up/installation of the inductive rotary encoder, e.g. to indicate to the installer whether the first and second members have a desired relative arrangement. Optionally, such information is used during the operation of the inductive rotary encoder, e.g. to monitor their relative arrangement and to provide a warning if their relative arrangement is not in accordance with a desired arrangement, and/or to compensate/correct the measure about the axis of rotation.

The apparatus could be configured such that the information about the relative arrangement of the first and second members in a degree of freedom other than about the axis of rotation is output in the form of a human detectable signal, for example a visual signal and/or an auditory signal. For instance, the apparatus could comprise a visual setup indicator to indicate (based on said information) whether or not the first and second members have a desired relative arrangement. Optionally, the apparatus is configured such that the information is output in a form that indicates a measure of the relative arrangement of the first and second members in one or more degrees of freedom other than about an axis of rotation.

For instance, the apparatus could be configured such that the information is output in a form which indicates the magnitude of (and/or direction of) at least one of the following: i) the separation between the first and second members, ii) the relative lateral (or "radial") position of the first and second members (e.g. in a direction perpendicular to the axis of rotation), and iii) the relative tilt of the first and second members (e.g. about an axis perpendicular to the axis of rotation).

Although the first and/or second members can comprise the at least one magnetic field sensor from which information about the relative arrangement of the first and second members in a degree of freedom other than about the axis of rotation is determined, it can be preferred for the at least one magnetic field sensor to be provided on the second member. Accordingly, it can be preferred that the second member comprises the at least one magnetic field sensor. One reason this is preferred is that the second member already comprises a receiver coil for sensing a magnetic field via which the relative rotational position of the first and second members about the axis of rotation can be measured. Accordingly, such a configuration can be beneficial for manufacturing efficiency and/or for improving simplicity of the inductive rotary encoder.

Optionally, one or more of the first, second and third receiver coils is/comprises the magnetic field sensor from which information about the relative arrangement of the first and second members in a degree of freedom other than about the axis of rotation is determined. For instance, information about the separation of the first and second members could be determined from the output from one or more of the first, second and third receiver coils, e.g. by analysing the strength, e.g. amplitude, of the signal output by the receiver coil.

In preferred embodiments, there is at least one magnetic field sensor (from which information about the relative arrangement of the first and second members in a degree of freedom other than about the axis of rotation is determined) separate to the receiver coil.

The at least one magnetic field sensor can comprise a plurality of separate magnetic field sensing regions (e.g. a plurality of separate magnetic field sensors) arranged at different positions on the first and/or second members. Such different positions can be different angular and/or radial positions (e.g. with respect to said scale track axis or with respect to said receiver axis and/or excitation axis). Accordingly, in accordance with preferred embodiments of the invention the at least one magnetic field sensor comprises a plurality of separate magnetic field sensing regions (e.g. a plurality of separate magnetic field sensors) arranged at different positions on the second member.

The at least one magnetic field sensor can comprise a first set of magnetic field sensing regions (e.g. a first set of magnetic field sensors) arranged at a first radial position and a second set of magnetic field sensing regions (e.g. a second set of magnetic field sensors) arranged at a second radial position on the first and/or second members. In a preferred embodiment, the apparatus (e.g. the inductive rotary encoder) is configured such that one of the first and second sets of magnetic field sensing regions is primarily sensitive to (in other words, the output of one of the first and second sets of magnetic field sensing regions is primarily dependent on) the relative tilt of the first and second members. In a preferred embodiment, the apparatus (e.g. the inductive rotary encoder) is configured such that one of the first and second sets of magnetic field sensing regions is primarily sensitive to (in other words, the output of one of the first and second sets of magnetic field sensing regions is primarily dependent on) the relative lateral/radial position of the first and second members. For example, in a preferred embodiment, the apparatus (e.g. the inductive rotary encoder) is configured such that the first set of magnetic field sensing regions is primarily sensitive to (in other words, the output of one of the first and second sets of magnetic field sensing regions is primarily dependent on) the relative tilt of the first and second members, and the second set of magnetic field sensing regions is primarily sensitive to (in other words, the output of one of the first and second sets of magnetic field sensing regions is primarily dependent on) the relative lateral/radial position of the first and second members. Accordingly, for example, the apparatus (e.g. the inductive rotary encoder) cam configured such that the output of the set of magnetic field sensing regions is used to determine the relative tilt of the first and second members, and the output of the second set of magnetic field sensing regions is used to determine the relative lateral/radial position of the first and second members.

Preferably, in use/when mounted on a machine (e.g. on relatively rotatable parts of a machine) the first set of magnetic field sensing regions (first set of magnetic field sensors) are arranged axially in-line with a conductive region (e.g. a scale track) of the first member and the second set of magnetic field sensing regions (second set of magnetic field sensors) are arranged axially in-line with a blank region (in particular a non-conductive region) of the first member. As will be understood, "axially" can be with respect to the axis of rotation. As will also be understood, the axial direction can be perpendicular to the plane of the excitation and/or receiver coils.

The at least one magnetic field sensor, for example the first and/or second set of magnetic field sensing regions (e.g. first and/or second set of magnetic field sensors), can comprises four quadrant magnetic field sensing regions (e.g. four quadrant magnetic field sensors).

According to a second aspect of the invention there is provided an apparatus comprising an inductive rotary encoder comprising first and second members relatively rotatable about an axis of rotation, the first member having at least first and second scale tracks, the second member having an excitation coil for generating a magnetic field which is manipulated by the at least first and second scale tracks, the second member also having at least a first receiver coil for sensing the magnetic field as manipulated by the first scale track, and a second receiver coil for sensing the magnetic field as manipulated by the second scale track, via which the relative rotational position of the first and second members about the axis of rotation can be measured. Features described above and below in connection with the first aspect of the invention are equally applicable to the second aspect of the invention.

Embodiments of the invention will now be described, by way of example only, with reference to the following drawings in which:

Figure 1 is a perspective view of an inductive rotary encoder according to the present invention;

Figure 2 is a schematic cross-sectional view of the inductive rotary encoder of Figure 1 mounted on a machine;

Figure 3 is a plan view of the rotor of the inductive rotary encoder of Figure 1;

Figure 4 is a plan view of the stator of the inductive rotary encoder of Figure 1;

Figure 5 is a plan view of a quadrant of the stator of Figure 4;

Figure 6 shows a plan view of a quadrant of the stator and rotor, wherein the stator's substrate is transparent so that the rotor can be seen under the stator;

Figure 7 shows a cross-sectional view of the stator and rotor taken along line C-C of Figure 6;

Figure 8 shows a plan view of the excitation coil of the stator and the outer and inner conductive loops of the rotor, in isolation;

Figure 9 is a block diagram of the system for calculating a measure of the relative rotational position of the rotor and stator;

Figure 10 is a graph illustrating how the output of the Arc Tangent Calculator for each receiver coil varies with relative rotation of the stator and rotor;

Figures 11(a) and (b) show schematic, partial cross-sectional views of the stator and rotor, and serve to illustrates the effect of a change in the lateral/radial position of the stator and rotor (e.g. eccentricity) on the electromagnetic field as sensed by the stator's sensors;

Figures 12(a), 12(b) and 12(c) show schematic, partial cross-sectional views of the stator and rotor, and serve to illustrates the effect of relative tilt on the electromagnetic field as sensed by the stator's relative tilt sensors;

Figure 13 is a schematic plan view of the stator's outer and inner quadrant sensors;

Figures 14(a) and 14(b) illustrate example Lissajous obtained from the outer and inner quadrant sensors;

and

Figures 15(a) and 15(b) are a plan views of alternative stator configurations.

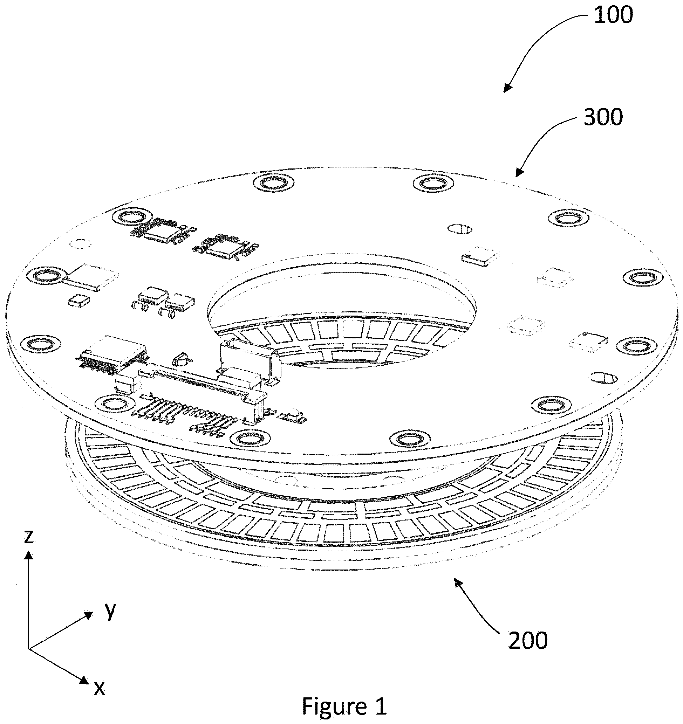

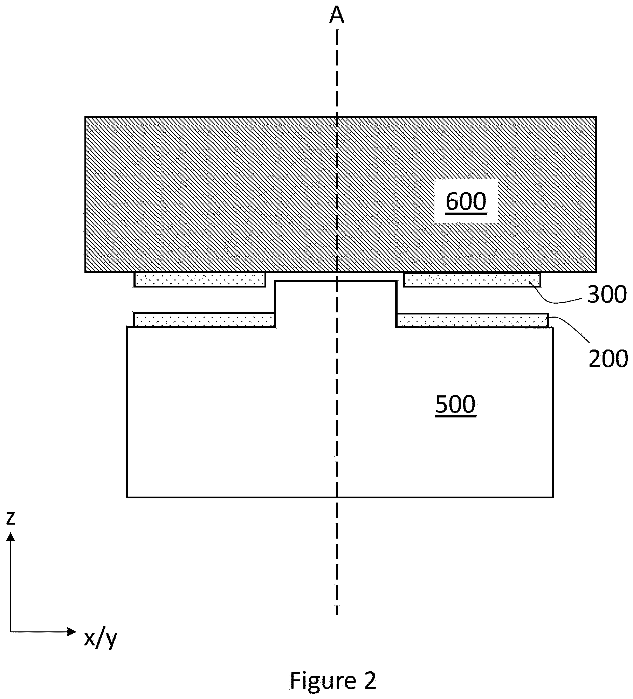

Referring to Figures 1 and 2, an example inductive rotary encoder 100 according to the present invention comprises a rotor 200 and a stator 300. As schematically shown in Figure 2, in use, the rotor 200 is mounted to a part of a machine such as a shaft 500 that is rotatable relative to a static part 600 of the machine about an axis A, and the stator 300 is mounted to the static part of the machine. Similar to known inductive rotary encoders, the stator 300 is an active/powered component and comprises excitation and receiver coils (described in more detail below) and associated electronics for creating and sensing an alternating electromagnetic field. Also similar to known inductive rotary encoders, the rotor 200 is a passive/unpowered component comprising scale features which manipulate the electromagnetic field sensed by the stator's 300 receiver coils such that the particular outputs of the stator's receiver coils are dependent on the relative rotational orientation of the stator 300 and rotor 200 about the axis A such that the relative rotational position (and/or derivatives thereof) of the stator 300 and rotor 200 (and hence of the static 600 and rotational 500 parts of the machine) can be measured therefrom. As will be understood, the rotor 200 and stator 300 could be configured the other way around (that is the rotor could have the active components, i.e. the excitation and receiver coils, thereon and the stator could have the passive components, i.e. the scale features, thereon) but due to the need for electrical connections it can be simpler and easier for the stator to be the active/powered component. Also, the rotor can be subject to high forces due to its motion and change in velocity, and so it can be beneficial to make the rotor the passive/unpowered component because the electronics on the active components can be susceptible to such forces. As will be understood, in another embodiment, both of the members could rotate, that is both the "stator" and "rotor" could be rotatable, in which case the both the "stator" 300 and "rotor" 200 could be referred to as "rotors", e.g. "rotor 1" and "rotor 2", or "active rotor" and "passive rotor". Nevertheless, for the sake of simplicity and illustration, the embodiment described has a static "stator" 300 and a "rotor" 200 that is rotatable relative to the stator 300.

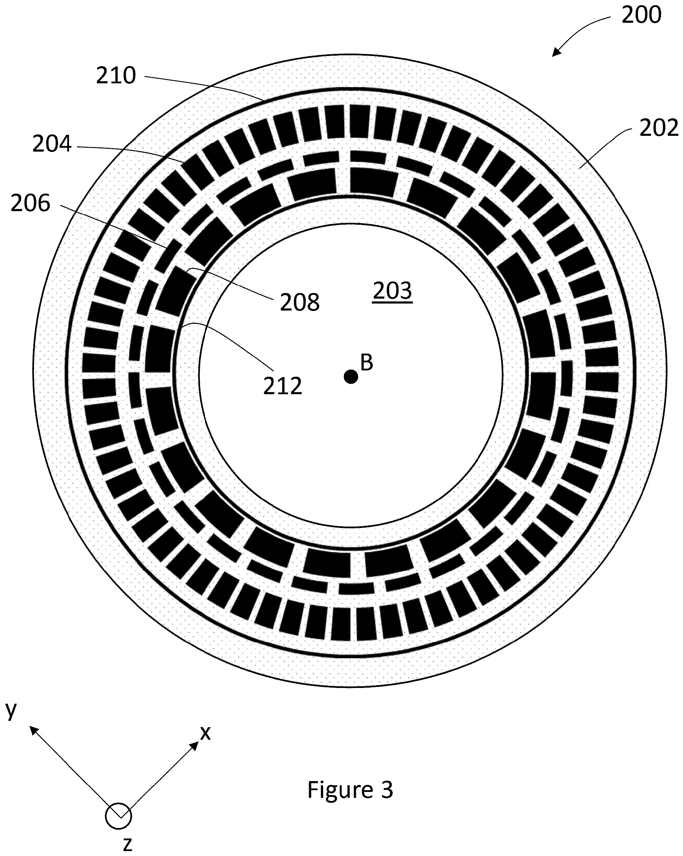

Referring to Figure 3, a plan view of the rotor 200 is shown. In the embodiment described, the rotor 200 comprises a disc-shaped substrate 202 on which scale features are provided. In the embodiment described, the substrate is made from fibreglass and has a generally circular shape and has a hole 203 extending through its middle such that the machine shaft (not shown in Figure 3) can be passed therethrough. A will be understood, the rotor substrate 202 could be made from other (e.g. non-conductive) materials, need not necessarily have a circular shape and need not necessarily have a hole extending therethrough.

The rotor's 200 scale features are centred on and extend annularly around an axis B. In the embodiment described, the scale features are conductive (in this embodiment copper, and are formed on the substrate by etching/milling away a copper coating on the fibreglass substrate 202; although could be formed via other processes, such as copper plating). In an alternative embodiment, the substrate 202 could comprise a conductive material, wherein non-conductive features are formed thereon so as to provide the scale features.

In the embodiment described, the rotor 200 comprises a first scale track 204, a second scale track 206 and a third scale track 208. Each scale track comprises a periodic series of scale features. The periods of the first 204, second 206 and third 208 scale tracks are different and configured such that each scale track has an integer number of periods per revolution and such that the phase relationship between the scale features of the three scale tracks at any angle about the axis B is mutually exclusive compared to any other angle of rotation. As shown, the first 204, second 206 and third 208 scale tracks are arranged concentrically with each other, and as such are all centred on the same axis B.

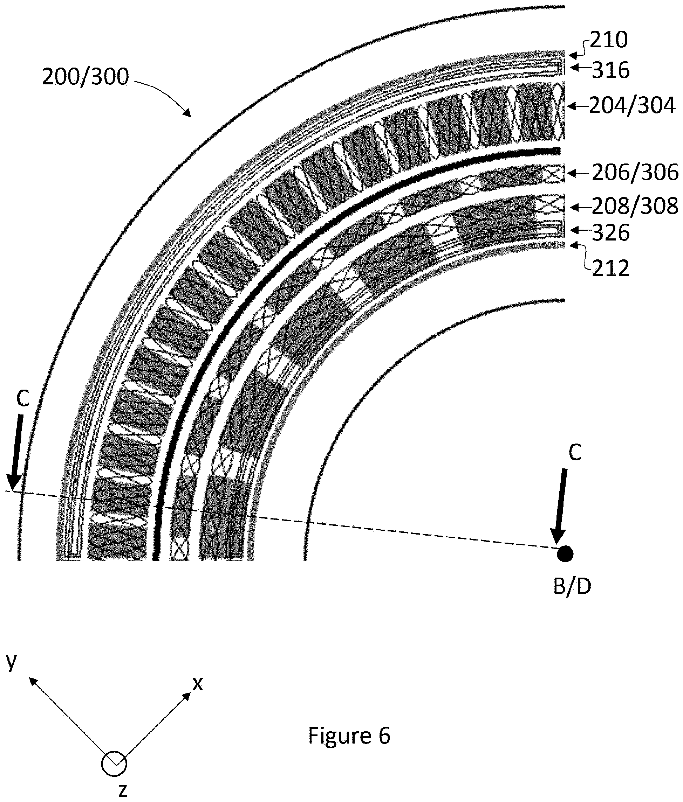

In the embodiment described, the rotor 200 also comprises an outer conductive loop 210 made from conductive material (in this embodiment, copper) and an inner conductive loop 212 made from conductive material (again, in this embodiment, copper). The outer 210 and inner 212 conductive loops extend around and are centred on and extend annularly around an axis D. As explained in more detail below, the outer 210 and inner 212 conductive loops help to increase the magnetic flux density in the radial space between them, thereby helping to increase the signal strength and system sensitivity of the stator's receiver coils (described below). As shown most clearly in Figures 6 and 7, in the embodiment described, the outer conductive loop 210 is located radially outside all of the three scale tracks 204, 206, 208, and radially outside all of the coils on the stator (i.e. radially outside: i) the excitation coil, ii) the first, second and third receiver coils, and iii) the quadrant coils). Also, as shown most clearly in Figures 6 and 7, in the embodiment described the inner conductive loop 210 is located radially inside all of the three scale tracks 204, 206, 208, and radially inside of all of the coils on the stator (i.e. radially inside: i) the excitation coil, ii) the first, second and third receiver coils, and iii) the quadrant coils). Accordingly, in other words, the three scale tracks 204, 206, 208, and also all of the coils on the stator (i.e. radially outside: i) the excitation coil, ii) the first, second and third receiver coils, and iii) the quadrant coils) are located radially between the outer 210 and inner 212 conductive loops.

In the embodiment described, the outer 210 and inner 212 conductive loops are closed, single-turn, plain circular copper loops. However, this need not necessarily be the case and the outer 210 and inner 212 conductive loops could take other forms. For instance, the outer 210 and inner 212 conductive loops could have a multiple-turn helical from (e.g. having a fixed radius but which extends axially through the substrate), could comprise a multiple-turn spiral form (e.g. having a constantly changing radius), could progress with a wave-like (e.g. sinusoidal) form/path around the axis. Optionally, multiple separate outer conductive loops 210 could be provided and/or multiple inner conductive loops 212 could be provided. Furthermore, one or both of the outer 210 and/or inner 212 conductive loops could be omitted if desired. Further still, whilst still being an optional feature, it has been found that the presence of the outer conductive loop 210 is particularly beneficial for those embodiments which comprise sensors for detecting relative tilt of the stator and/or rotor (described in more detail below). This is because as well as having the effect of increasing the signal strength for the receiver coils, it also makes the at least some of the sensors used in the tilt and/or lateral/radial position (e.g. eccentricity) detection substantially more sensitive to the relative tilt of the rotor and stator, thereby making it easier to distil relative tilt measurements from such sensors. In particular, as explained in more detail below, due to the outer conductive loop 210, it is possible to configure the inductive rotary encoder device such that the output of the outer quadrant coils (described below) are assumed to measure and relate only to the relative tilt of the rotor 200 and stator 300. Furthermore, the presence of one or both of the outer 210 and/or inner 212 conductive loops is particularly useful in those embodiments in which the number of excitation coils is fewer than the number of scale tracks and respective receiver coils (e.g. in order to improve the magnetic flux and hence signal strength thereof).

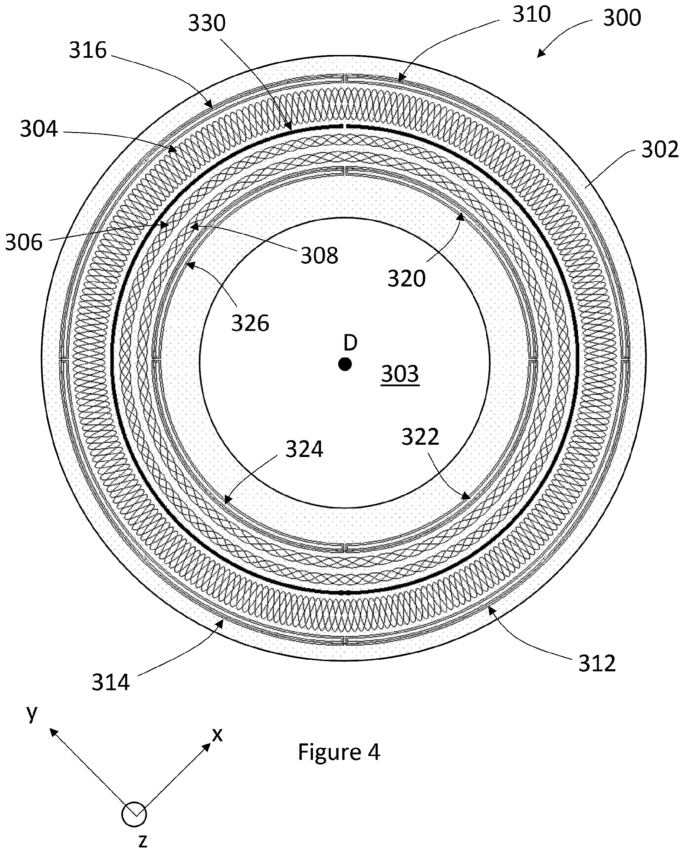

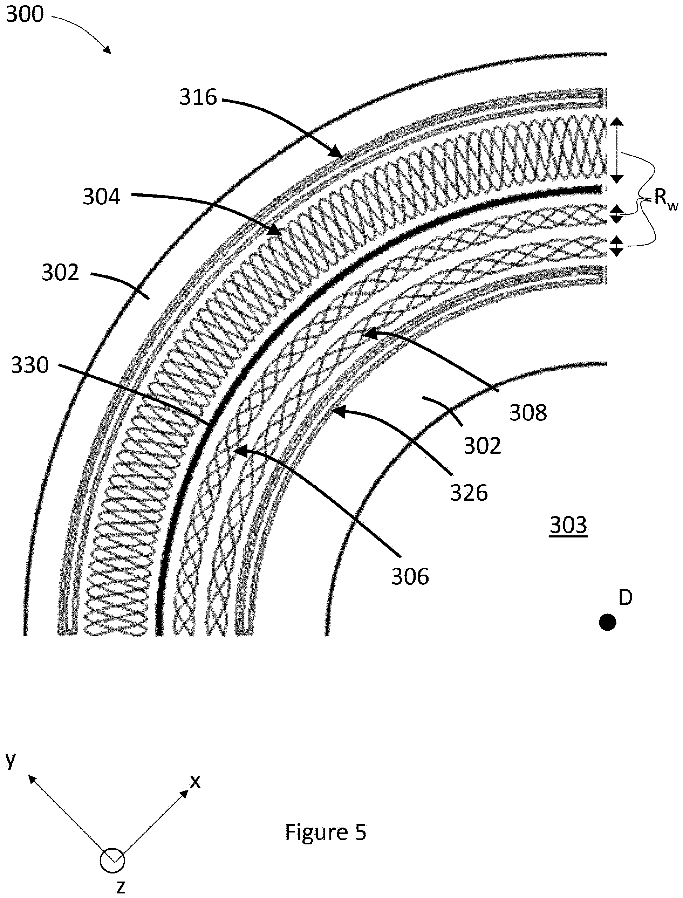

Turning now to Figures 4 and 5, Figure 4 shows a plan view of the stator 300 and Figure 5 shows a detailed view of one quadrant of the stator 300. The stator 300 comprises a disc-shaped substrate 302 on which the excitation and receiver coils are provided, along with associated electronics which are provided on the other side of the substrate 302 to that shown. (In Figure 5, the shading of the stator substrate has been omitted to aid viewing of the other features of the stator). In the embodiment described, the substrate 302 of the stator is made from fibreglass and has a generally circular shape and has a hole extending through its middle such that the machine shaft 500 can be passed therethrough. In accordance with other embodiments of the invention, the stator substrate 302 could be made from other non-conductive materials (such as ceramic), need not necessarily have a circular shape and need not necessarily have a hole extending therethrough.

The stator 300 comprises a first scale receiver coil 304, a second scale receiver coil 306, and a third scale receiver coil 308, which are concentrically arranged and each of which are centred on and extend annularly around the axis D. As shown, the width as measured in the radial dimension (e.g. "radial width" $R_w$) of the first 304 receiver coil is larger than that of the second 306 and third 308 receiver coils. In the embodiment show, the radial width $R_w$ of the first 304 receiver coil is about double that of the second 306 and third 308 receiver coils. As will be understood, because the receiver coils are progress around the axis D along a wave-like (e.g. sinusoidal) path, another appropriate term for radial width of a receiver coil is "coil amplitude".

In the embodiment described, each of the first 304, second 306 and third 308 receiver coils actually comprise a first sinusoidally extending differential copper coil and a second sinusoidally extending differential copper coil. The first and second differential coils are overlapping and are phase shifted by 90° relative to each other. Accordingly, the first differential coil could be referred to as a SIN coil and the second differential coil could be referred to as COS coil. Accordingly, each of the first 304, second 306 and third 308 receiver coils will actually output a pair of signals which are in quadrature (i.e. the signals are phase-shifted by 90°), and so, for example, can be labelled as SIN and COS signals. As will be understood, other configurations are possible, such as a three-phase system, comprising three sets of coils phase shifted by 60°. In another embodiment, each track/channel could comprise just a single coil, but such a system would be less accurate.

As shown in Figures 4 and 5, the first 304, second 306, and a third 308 scale receiver coils are sinusoidal in that they progress around the axis D along a substantially sinusoidal path. In fact, in the embodiment described, each of the SIN and COS coils of the first 304, second 306 and third 308 receiver coils are actually differential coils, having a clockwise and an anti-clockwise turn per period to cancel the residual magnetic field. The coil shape is sinusoidal for harmonic suppression reasons. Of course, the coil shape/path does not have to be sinusoidal. For instance, the coils could have a different periodic shape/path to pick up the modulation from the scale. Also, they don't have to be differential coils. In the embodiment described, the period of the sinusoidal form of the first 304, second 306, and a third 308 scale receiver coils are different to each other (and in the example described are configured such that the period of the sinusoidal form of the first 304, second 306, and a third 308 scale receiver coils matches that of their corresponding scale track). As will be understood, this doesn't have to be the case, although doing so can be beneficial from a processing and signal quality point of view.

In the embodiment described, each of the first 304, second 306 and third 304 receiver coil comprises a single-turn (or "single loop") coil. In another embodiment, one or more of receiver coils could comprise a multiple-turn (or "multiple-loop") coil.

As explained in more detail below, when in use/assembled, the inductive encoder apparatus is configured such that: i) the first scale receiver coil 304 is arranged axially in-line with/directly above (in the orientation shown in Figure 7) the first scale track 204; ii) the second scale receiver coil 306 is arranged axially in-line with/directly above (in the orientation shown in Figure 7) the second scale track 206; and iii) the third scale receiver coil 308 is arranged axially in-line with/directly above (in the orientation shown in Figure 7) the third scale track 208.

The stator 300 also comprises an excitation coil 330 (which could also be referred to as a "transmit coil") which is centred on and extends annularly around the axis D. In the embodiment described, the excitation coil 330 is located radially between the first scale receiver coil 304 and the second scale receiver coil 306 and comprises a single-turn (or "single loop") coil. In the embodiment described, the single loop excitation coil actually comprises two loops of copper, arranged in parallel on adjacent layers of the substrate 302, their ends being joined to a single pair of terminals, to form a single excitation coil that extends around the axis D, concentric with the first 304, second 306 and third 308 receiver coils. In the embodiment described, there is just one single excitation coil 330 which is shared between the three receiver coils (i.e. the one excitation coil 330 is used to generate the electromagnetic field for the three receiver coils). As will be understood, other excitation coil configurations are possible. For instance, more than one excitation coil could be provided; in such a case, ideally they would all be in resonance. As another example, the/each excitation coil could comprise a multiple-turn (or "multiple-loop") coil. In another example, the/each excitation coil could comprise a "folded-rectangular loop".

In use/during operation, an alternating current is passed through the excitation coil 330 which thereby generates an alternating electromagnetic field. The first 304, second 306, and a third 308 scale receiver coils are arranged to sense the electromagnetic field and provide outputs in response thereto. As will be understood, and as described in more detail below, the electromagnetic field is affected by (i.e. the electromagnetic field is changed by) the presence of the scale features of the first 204, second 206 and third 208 scale tracks on the rotor 200, and this phenomenon is used to determine the relative rotational position of the rotor 200 and stator 300 about the axes B/D.

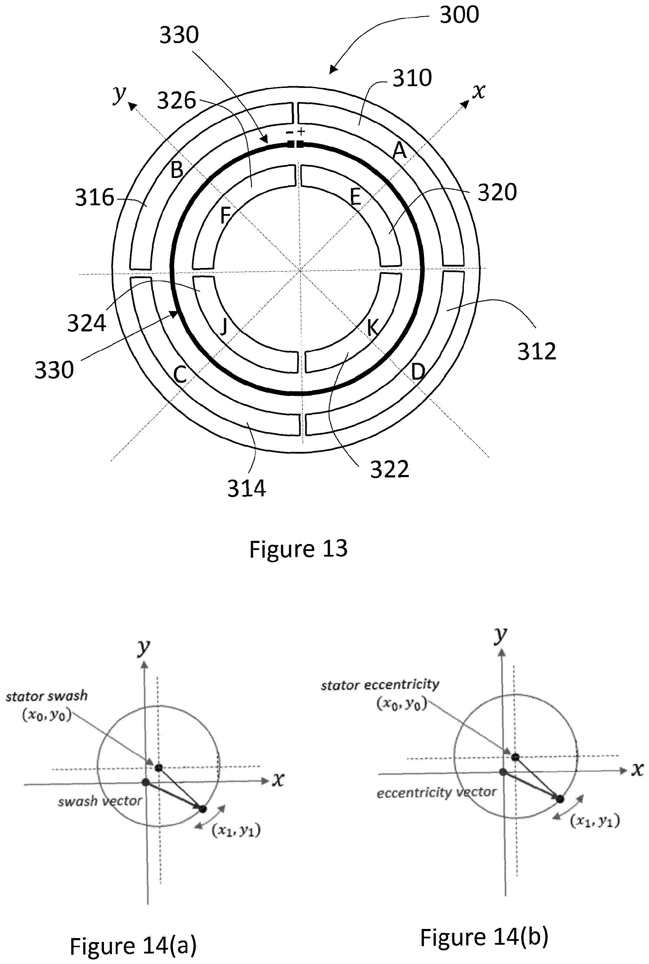

The stator 300 also comprises first 310, second 312, third 314, and fourth 316 outer quadrant coils and first 320, second 322, third 324, and fourth 326 inner quadrant coils. The angle subtended by each quadrant is substantially 90°. As will be understood, the length of each quadrant coil could be shorter such that the angle it subtends is less than 90°, but it can be preferred to maximise the angle each quadrant coil subtends (within the confines of a quadrant) in order to maximise their signal strength and avoid blind spots. As described in more detail below in connection with Figures 13 and 14, the inner and outer quadrant coils can be used to detect relative tilt and/or lateral/radial position (e.g. eccentricity) of the rotor 200 and stator 300. As illustrated by Figures 6 and 7, when assembled/in use, the outer quadrant coils (of which only the fourth outer quadrant coil 316 is shown in Figures 6 and 7) sit axially in-line with (e.g. directly above in the orientation shown in Figure 7) a blank region of the rotor's substrate 202 and the inner quadrant coils (of which only the fourth inner quadrant coil 326 is shown in Figures 5, 6 and 7) sit axially in-line with/directly above (in the orientation shown in Figure 7) the third scale track 208.

As is also illustrated by Figures 6 and 7, the radial width of the third scale track 208 is selected such that both the third scale receiver coil 308 and the inner quadrant coils (of which only the fourth inner quadrant coil 326 is shown in Figures 6 and 7) sit axially in-line with (e.g. directly above in the orientation shown in Figure 7) the third scale track 208.

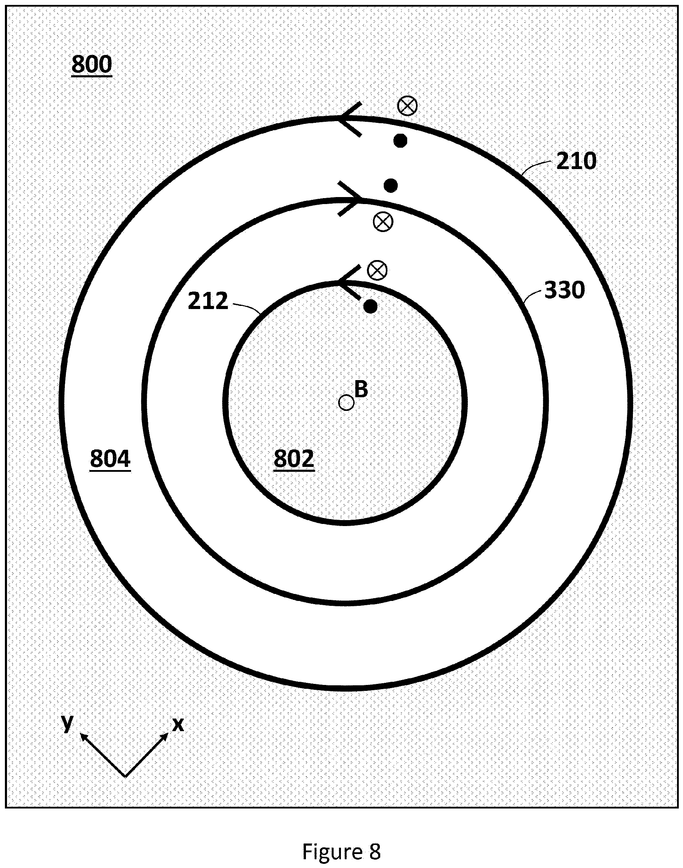

Referring now to Figure 8, the effect the outer 210 and inner 212 conductive loops have on the electromagnetic field produced by the excitation coil 330 will now be explained. In summary, the outer 210 and inner 212 conductive loops have the effect of "folding back" the electromagnetic field produced by the excitation coil 330 into the region in which the receiver coils are located so as to increase the magnetic flux density in the radial space between them, thereby helping to increase the magnetic field strength in-between the two coils.

In accordance with the above description, the excitation coil 330 is on the stator (not shown in Figure 8) and has an alternating current flowing in it, thereby generating an electromagnetic field in its vicinity. The arrow on the excitation coil 330 illustrates the direction of current flow through the excitation coil 330 at a particular instant in time (which in Figure 8 is shown in a clockwise direction). From the right-hand grip rule of electromagnetism, the excitation coil 330 produces a magnetic field with a $\otimes$ polarity inside the loop (into the page) and a • polarity outside the loop (out of the page). For ease of illustration, Figure 8 only shows the polarity for a single half-cycle of the alternating current/electromagnetic field.

Also in accordance with the above description, the outer 210 and inner 212 conductive loops are provided on the rotor and are respectively situated radially outside and radially inside the rotor's scale tracks (also not shown in Figure 8). Both the outer 210 and inner 212 conductive loops see a net magnetic flux of polarity $\otimes$ passing through them. By Lenz's Law, they both induce a current flow to oppose the magnetic field that created it (i.e. at the particular instant in time illustrated in Figure 8 is in an anti-clockwise direction as illustrated by the arrows on the outer 210 and inner 212 conductive loops). As result both the outer 210 and inner 212 conductive loops produce a ● polarity inside their loop and a $\otimes$ polarity outside their loop. Accordingly, within the shaded areas 800, 802 of Figure 8 the magnetic flux from the outer 210 and inner 212 conductive loops oppose the magnetic flux from the excitation coil 330, reducing the magnetic flux density but, in contrast, within the non-shaded area 804 of Figure 8 (which is the area in which the scale tracks of the rotor and receiver coils of the stator are located) the magnetic flux from the outer 210 and inner 212 conductive loops are in phase with the excitation coil 330 and hence will act to increase the magnetic flux density in that area.

The operation of the inductive rotary encoder device 100 will now be described. As mentioned above, the excitation coil 330 has an alternating current flowing in it thereby generating an alternating electromagnetic field in its vicinity, and the first 304, second 306, and a third 308 scale receiver coils are arranged to sense the alternating electromagnetic field and provide outputs in response thereto. The alternating electromagnetic field is affected by (e.g. is changed by) the presence of the scale features of the first 204, second 206 and third 208 scale tracks on the rotor 200.

The effect the first 204, second 206 and third 208 scale tracks on the rotor 200 have on the alternating electromagnetic field sensed by their respective first 304, second 306, and a third 308 scale receiver coils varies with relative rotation of the rotor 200 and stator 300 about the axes B/D. In particular, such effect on the alternating electromagnetic field varies in a cyclical manner, the spatial frequency of which depends on the period of the scale features. Furthermore, the effect the first 204, second 206 and third 208 scale tracks on the rotor 200 have on the alternating electromagnetic field, as sensed by their respective first 304, second 306, and a third 308 scale receiver coils, differs from each other due to their different scale periods.

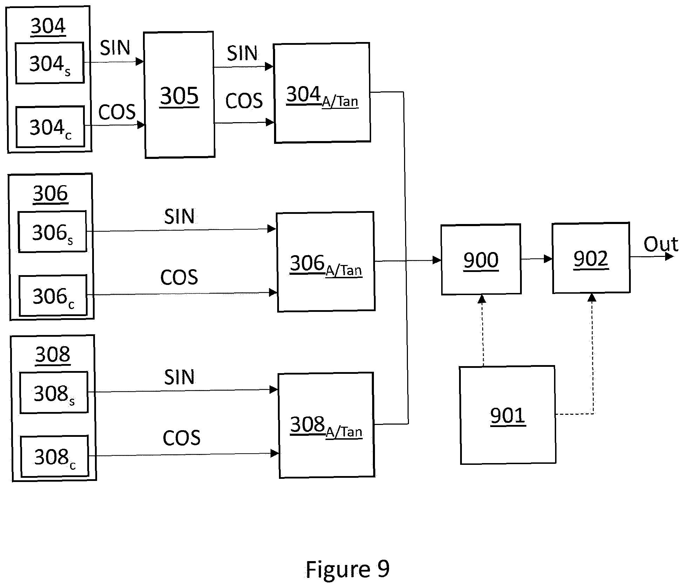

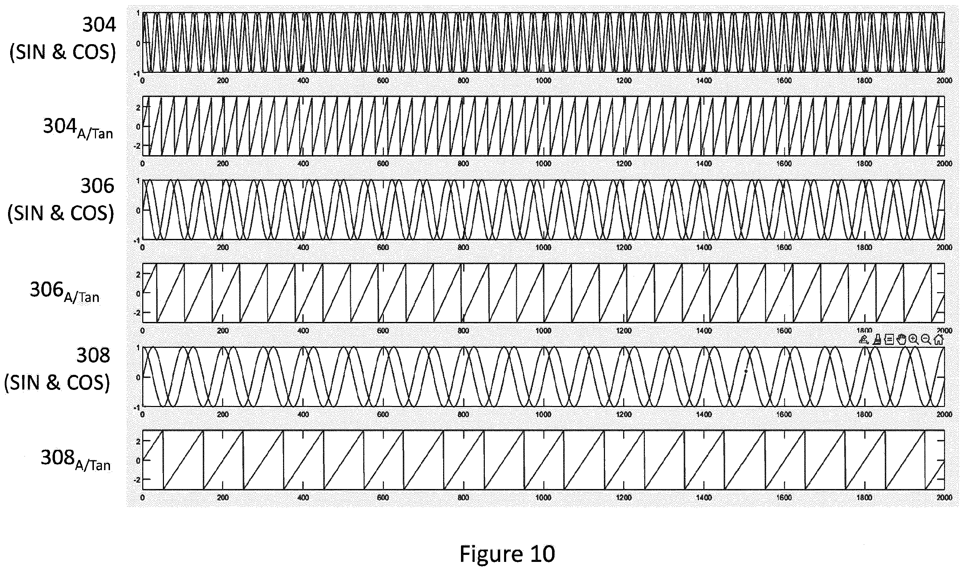

Accordingly, the scale features of the first 204, second 206 and third 208 scale tracks on the rotor 200 impart cyclical variations in the alternating electromagnetic field at different spatial frequencies such that the spatial frequency of the cyclical variation in the electromagnetic field caused by the first scale track and as sensed by the first scale receiver coil 304, the spatial frequency of the cyclical variation in the electromagnetic field caused by the second scale track and as sensed by the second scale receiver coil 306, and the spatial frequency of the cyclical variation in the electromagnetic field caused by the third scale track and as sensed by the third scale receiver coil 308, are all different to each other. Accordingly, the cyclical variation in the signals produced from the first 304, second 306, and a third 308 scale receiver coils have different spatial periods/frequencies. The significance of this will now be described with reference to Figures 9 and 10.

As explained above in connection with Figures 4 and 5, each of the first 304, second 306 and third 308 receiver coils actually comprise overlapping differential coils, having a sinusoidal form, and which are phase shifted by 90° relative to each other. Accordingly, each of the first 304, second 306 and third 308 receiver coils will actually output a pair of signals which are in quadrature (i.e. the signals are phase-shifted by 90°), and so, for example, can be labelled as SIN and COS signals. This is schematically illustrated in Figure 9, wherein a first one of the coils in a pair is labelled with a "s" suffix and the other of the coils in a pair is labelled with a "c" suffix.

Accordingly, Figure 9 schematically illustrates that the first receiver coil 304 comprises a (differential) SIN coil 304, and a (differential) COS coil $304_c$, the second receiver coil 306 comprises a SIN coil 306, and a COS coil $306_c$, and the third receiver coil 308 comprises a SIN coil 308, and a COS coil $308_c$. As illustrated, the outputs from each coil in a pair is provided to a corresponding Arc Tangent Calculator (i.e. a first Arc Tangent Calculator $304_{A/Tan}$, a second Arc Tangent Calculator $306_{A/Tan}$, and a third Arc Tangent Calculator $308_{A/Tan}$) which calculates an angle from the pair of SIN and COS signals. Figure 10 illustrates how the angles calculated by each of the first $304_{A/Tan}$, second $306_{A/Tan}$, and third $308_{A/Tan}$ Arc Tangent Calculators vary with relative rotation of the stator and rotor about the axes B/D.

As mentioned above in connection with Figure 3, the periods of the first 204, second 206 and third 208 scale tracks are different. In particular, the first 204, second 206 and third 208 scale tracks and the first 304, second 306 and third 308 receiver coils are configured such that the that for each angle of rotation of the rotor and stator about the axes B/D the signal phases of the at least three separate signal channels have a unique combination. This enables an absolute rotational position to be determined from the outputs of the three Arc Tangent Calculators.

As will be understood, each of the scale tracks and associated scale receiver coils and electronics (e.g. the Arc Tangent Calculators) form a "signal channel". In this embodiment: the first scale track 204, first receiver coil 304 and first Arc Tangent Calculator $304_{A/Tan}$, form a first signal channel; the second scale track 206, second receiver coil 306 and second Arc Tangent Calculator $306_{A/Tan}$, form a second signal channel; and the third scale track 208, third receiver coil 308 and third Arc Tangent Calculator $304_{A/Tan}$, form a third signal channel.

In this embodiment, the first scale track 204 has the highest number of integer periods per revolution, and could be referred to as the "Incremental Track" (and hence the channel associated therewith could be referred to as the "Incremental Channel"). The second 206 and third 208 scale tracks signal channels, have a lower number of periods per revolution compared to the first scale track 204. The second a third scale tracks (and hence the signal channels associated therewith) could be referred to as (first and second) "Vernier Tracks" (and hence the second and third signal channels associated therewith could be referred to as "Vernier Channels"). In the embodiment described the first 204, second 206 and third 208 scale tracks are configured such that such that the only common integer factor of the period count of all of the scale tracks is 1. As will be understood, other terms used in the art of inductive encoders for "period count" include "feature count" and "line count".

Compared to a two-channel system, a three-channel system provides significantly greater freedom in the choice of the number of periods of each channel and provides a greater error tolerance in the calculation of the channel phase. This error tolerance allows a high number of incremental periods per revolution to be used and hence large diameter encoders are possible.

The relatively large error tolerance on the phase detection allows small signal amplitudes to be used for the Vernier Channels with a lower signal to noise ratio. Indeed, it has been found that with a three-channel system limited or no filtering and automatic/dynamic signal correction need be applied to the Vernier Channels, thereby simplifying the design of and reducing the cost of the inductive rotary encoder system. Therefore, as shown in Figure 9, in the embodiment described, only SIN and COS signals from the first receiver coil 304 pass through an automatic/dynamic signal corrector 305, which in this embodiment performs automatic/dynamic gain correction (AGC), automatic/dynamic offset correction (AOC), automatic/dynamic balance correction (ABC), and automatic/dynamic phase correction (APC), on the output from the first receiver coils 304, before being passed to its corresponding Arc Tangent Calculator $304_{A/Tan}$.

Referring back to Figure 9, the signal from each of the three channels (i.e. the output from each of the first $304_{A/Tan}$, second $306_{A/Tan}$, and third $308_{A/Tan}$ Arc Tangent Calculators) is passed to a position calculator 900 which calculates therefrom the absolute position of the stator and rotor about the axis of rotation. For instance, this could be done via a function or look-up table based on the values of each channel/outputs from the three Arc Tangent Calculators. However, in the embodiment described, the absolute position is calculated by a loop which increments through every possible incremental period and compares the actual Vernier phases to the expected Vernier phases for that period. Once the loop has been completed, there should only be one position detected. The use of an iterative loop for determining the position is particularly preferred over the use of other techniques, such as those that use a look up table. For instance, an iterative loop can be more efficient, especially from a memory point of view, and also more versatile (e.g. if the process is to be used across different sized inductive rotary encoders).

For example, the position calculator 900 can be configured to take the value output by the first Arc Tangent Calculator $304_{A/Tan}$, and then, for each of the scale periods of the first scale track/incremental channel (in the embodiment described for each of the sixty-four scale periods), identify what value you would expect to see from the second $306_{A/Tan}$ and third $308_{A/Tan}$ Arc Tangent Calculators. The position calculator 900 then compares the expected values with the actual values output by the second $306_{A/Tan}$ and third $308_{A/Tan}$ Arc Tangent Calculators, and checks if they match. Whether or not they match is recorded. As mentioned above, this is repeated for each of the scale periods of the first scale track/incremental channel (in the embodiment described for each of the sixty-four scale periods). There should be only one match, and if so then that matched position is provided to the output unit 902. If there are no matches, or more than one match, an error state is reported to the output unit 902. Output unit 902 can be any suitable unit for outputting/communicating the position information/error state to an external device, e.g. such as a position controller, including via a wired or wireless connection.

As will be understood, the Art Tangent Calculators $304_{A/Tan}$, $306_{A/Tan}$, $308_{A/Tan}$ and the position calculator 900 can comprise any suitable processing device, including, but not limited to bespoke processing devices configured for the specific application (e.g. a field programmable gate array "FPGA") as well as a more generic processing devices which can be programmed (e.g. via software) in accordance with the needs of the application in which it is used. Accordingly, suitable processing devices include, for example, a microprocessor, CPU (Central Processor Unit), FPGA (Field Programmable Gate Array), or ASIC (Application Specific Integrated Circuit), or the like.

As mentioned above, in the embodiment described, the stator 300 comprises first 310, second 312, third 314, and fourth 316 outer quadrant coils and first 320, second 322, third 324, and fourth 326 inner quadrant coils. These are optional sensors and can be used to detect/provide a measure of the relative lateral/radial position (e.g. eccentricity), and/or relative tilt, of the rotor 200 and stator 300.

As will be understood, relative eccentricity of the rotor 200 and stator 300 can be said to exist when the axis B about which the rotor's scale tracks extend and are centred on is not coincident with the axis D about which the stator's receiver coil extend and are centred on. In operation/use, such eccentricity could exist, for example, due to the rotor 200 not being arranged concentric to the machine shaft's axis of rotation, and/or due to the stator 300 not being arranged concentric to the machine shaft's axis of rotation, and/or due to the scale tracks and/or receiver coils not actually being centred on their assumed axis B/D. Accordingly, eccentricity of the rotor 200 and stator 300 is related to the lateral/radial position of the rotor 200 and stator 300 (i.e. their relative position in a degree of freedom/dimension/plane perpendicular to the axis of rotation (and hence perpendicular to the B and D axes)).

Relative tilt is a measure of how parallel the rotor 200 and stator 300 are. In operation/use, such relative tilt could be due to the rotor 200 being mounted to the machine such that its axis B (about which the rotor's scale tracks extend and are centred on) is not parallel to the machine shaft's axis of rotation A, and/or due to the stator 300 being mounted to the machine such that its axis D (about which the stator's scale receiver coils extend and are centred on) is not parallel to the machine shaft's axis of rotation A.

As will be understood, because the scale receiver coils 304, 306, 308 are full ring sensors (i.e. they extend fully around the axis) the effect of any eccentricity of the rotor 200 and/or stator 300 on its own (i.e. in the absence of any relative tilt of the rotor 200 and stator 300) will cancel-out and therefore doesn't cause an error, and similarly the effect of any relative tilt of the rotor 200 and stator 300 on its own (i.e. in the absence of any eccentricity) will cancel-out and therefore doesn't cause an error.

However, it has been found that the presence of both: i) eccentricity of the rotor 200 and/or stator 300; and ii) any relative tilt of the rotor 200 and stator 300, does result in a once per revolution system error being introduced into the rotational position measurement. In particular, the error could be expressed functionally as: Error = (Stator Eccentricity x Rotor Tilt) + (Stator Tilt x Rotor Eccentricity); (where "x" represents a vector cross product). Accordingly, for example, if the stator is tilted but the rotor has no eccentricity, then no error will result.

The once per revolution error can be calculated for a given value of relative tilt and eccentricity. Indeed, it has been found that the once per revolution error follows the equation:

$$e = \frac{\pi}{P} \zeta \text{ x } \varepsilon$$

Where $\zeta$ is the relative tilt vector and $\varepsilon$ is the relative eccentricity vector and where "x" represents a vector cross product.

Therefore, by measuring the relative tilt and the relative lateral/radial position (e.g. eccentricity) of the stator and rotor, it becomes possible to either compensate for the error or remove it during installation. To this end, as mentioned above, the stator 300 comprises two sets of quadrant coils on the stator 300. In particular the stator 300 comprises: a first set of quadrant coils comprising first 310, second 312, third 314, and fourth 316 outer quadrant coils; and a second set of quadrant coils comprising first 320, second 322, third 324, and fourth 326 inner quadrant coils.

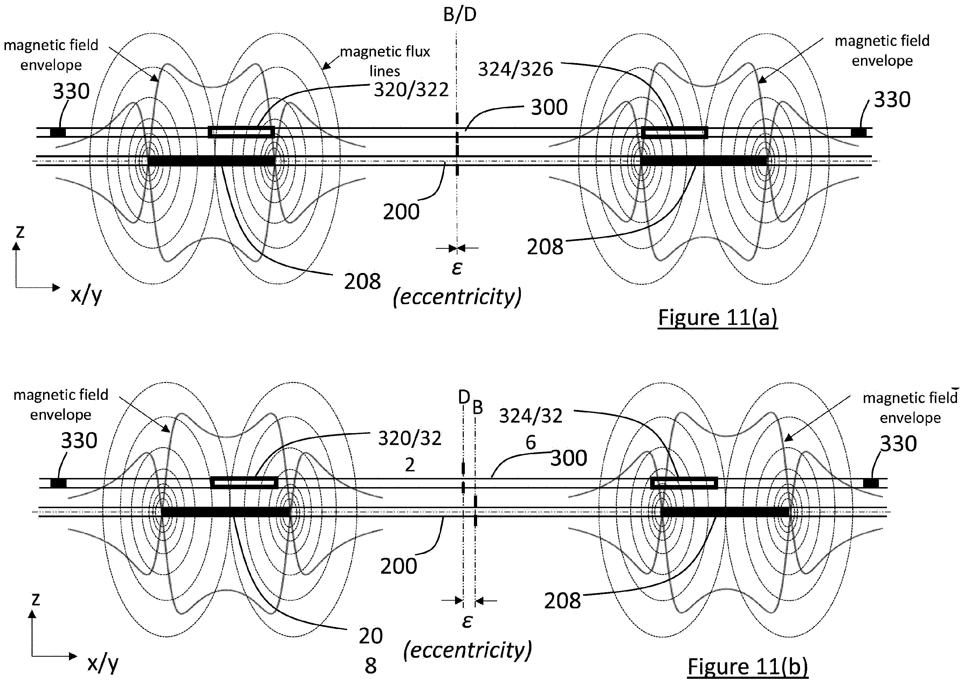

An example of how these outer and inner quadrant coils can be used to detect relative tilt and/or the relative lateral/radial position (e.g. eccentricity) of the rotor 200 and stator 300 will now be explained with reference to Figures 11 to 14.

With regard to the detection of relative lateral/radial position (e.g. eccentricity) of the rotor 200 and stator 300, it should be noted that in this embodiment the first 320, second 322, third 324, and fourth 326 inner quadrant coils are arranged axially in-line with/directly above scale features (e.g. see Figures 6 and 7). In particular the first 320, second 322, third 324, and fourth 326 inner quadrant coils are arranged axially in-line with/directly above the third scale track 208. Furthermore, in this embodiment, the length of each of the first 320, second 322, third 324, and fourth 326 inner quadrature coils are an integer number of periods of the third scale track. The effect of this is that the axial separation between the stator 300 and rotor 200 does not substantially affect the strength of the magnetic field sensed by the first 320, second 322, third 324, and fourth 326 inner quadrature coils and therefore they are substantially immune/insensitive to any relative tilt of the stator 300 and rotor 200. This is due to eddy currents produced within the scale features which oppose the transmitted magnetic field. The opposing magnetic field produced by the eddy currents gets forced down through the gap between the scale features - therefore net magnetic field and sensed by the first 320, second 322, third 324, and fourth 326 inner quadrature coils remains the same for the expected range of axial separation of the stator and rotor during normal installation and operation circumstances.

However, as schematically illustrated by Figures 11(a) and 11(b), the first 320, second 322, third 324, and fourth 326 inner quadrant coils are sensitive to the relative lateral position of the rotor 200 and stator 300 (note that for ease of illustration, only the excitation coil 330 and inner quadrant coils 320, 322, 324, 326 of the stator 300, and only the third scale track of the rotor 200, are shown in Figures 11(a) and (b)). For instance, as illustrated in Figure 11(a) which illustrates a situation in which there is no relative eccentricity "$\varepsilon$" between the rotor 200 and stator 300, the net magnetic flux (illustrated by the "magnetic field envelope" line) to which opposing inner quadrant coils are exposed is equal. In contrast, as illustrated in Figure 11(b) which illustrates a situation in which there is relative eccentricity "$\varepsilon$" of the rotor 200 and stator 300, the net magnetic flux to which opposing inner quadrant coils are exposed differs. Accordingly, the difference in the outputs of opposing inner quadrant coils can be used to obtain a reliable measure of relative lateral/radial position (e.g. eccentricity) of the stator 300 and rotor 200.

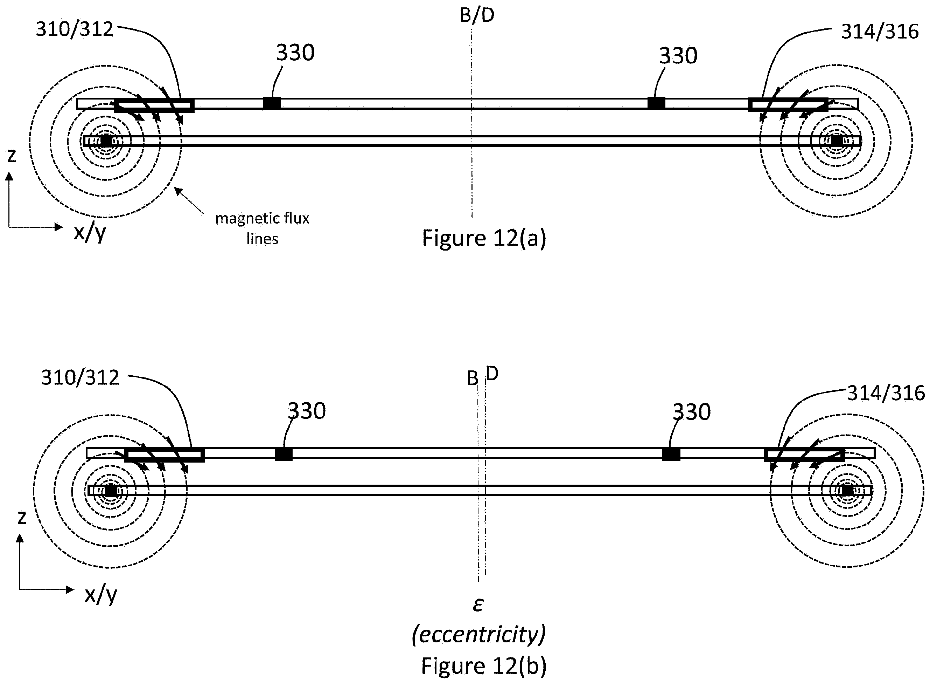

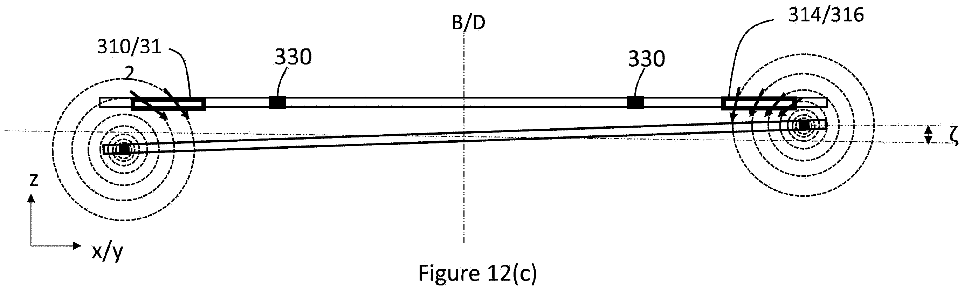

With regard to the detection of relative tilt of the rotor 200 and stator 300, it should be noted that in this embodiment the first 310, second 312, third 314, and fourth 316 outer quadrant coils are arranged axially in-line with/directly above a blank region of the rotor 200 (e.g. see Figures 6 and 7). With such a configuration, it has been found that the first 310, second 312, third 314, and fourth 316 outer quadrant coils are substantially insensitive to any relative eccentricity of the rotor 200 and stator 300 for the extent of eccentricity that would normally be expected of the rotor 200 and stator 300 during normal installation and operation. This is schematically illustrated in Figures 12(a) and 12(b) where it can be seen that there is little change in the state of magnetic flux to which the outer quadrant coils are exposed when there is a change in the extent of eccentricity of the rotor 200 and stator 300. In contrast, as illustrated in Figures 12(a) and 12(c), there is a significant change in the state of magnetic flux to which the outer quadrant coils are exposed when there is a change in the relative tilt of the rotor 200 and stator 300. Indeed, not only does the of flux density (represented by the number of magnetic flux lines) increase for the outer quadrant coils which become closer to the rotor due to the relative tilt, there is a decrease in the "angle" of incidence of the magnetic flux passing through the outer quadrant coils, which leads to a greater inductive effect in the quadrant coil(s) that are closer to the rotor 200. Accordingly, the difference in the outputs of opposing outer quadrant coils can be used to obtain a reliable measure of relative tilt of the stator 300 and rotor 200.

Note that for ease of illustration, only the excitation coil 330 and outer quadrant coils 310, 312, 314, 316 of the stator 300, and only the outer conductive loop 210 of the rotor 200, are shown in Figures 12(a), 12(b) and 12(c).

Bearing in mind the phenomena explained above in connection with Figures 11 and 12, reference is now made to Figure 13 which schematically illustrates the outer and inner quadrant coils and the excitation coil 330 of the stator 300. For ease of reference, the first 310, second 312, third 314, and fourth 316 outer quadrant coils have been labelled A, D, C and B respectively, and the first 320, second 322, third 324, and fourth 326 inner quadrature coils have been labelled E, K, J and F respectively.

By subtracting the outputs from opposite quadrant coils, a quadrature output can be obtained from each set. For example, the following signals can be obtained form the outer and inner quadrant coils:

$$x_1 = (A - C)$$

$$y_1 = (B - D)$$

$$x_2 = (E - J)$$

$$y_2 = (F - K)$$

As illustrated in Figure 14(a), plotting $x_1$ against $y_1$ produces a Lissajous which is descriptive of the relative tilt of the rotor 200 and stator 300. The centre of the Lissajous of Figure 14(a) is due to tilt of the stator 300 (its effect is static), and the radius of the Lissajous of Figure 14(a) is due to tilt of the rotor 200. At any particular instant in time, the Lissajous position (the $x_1$, $y_1$ values) describes the tilt error vector.

As illustrated in Figure 14(b), plotting $x_2$ against $y_2$ produces a Lissajous which is descriptive of the relative eccentricity of the rotor 200 and stator 300. The centre of the Lissajous of Figure 14(b) is due to eccentricity of the stator 300 (its effect is static), and the radius of the Lissajous of Figure 14(b) is due to eccentricity of the rotor 200. At any particular instant in time, the Lissajous position (the $x_2$, $y_2$ values) describes the eccentricity error vector.

Accordingly, the values of $x_1$, $y_1$, $x_2$, $y_2$ can be used to determine the current state of relative tilt and the lateral/radial position (e.g. eccentricity), which can be used to correct the position calculated by the position calculator 900. For instance, as illustrated in Figure 9, the inductive rotary encoder apparatus can comprise a tilt/lateral position (e.g. eccentricity) calculator 901 which passes the $x_1$, $y_1$, $x_2$, $y_2$ values to the position calculator 900 which can use them to correct the position provided to the output unit 902. As also illustrated by Figure 9, the $x_1$, $y_1$, $x_2$, $y_2$ values could instead/additionally be passed to the output unit 902 for outputting to an external device. For example, the external device could use the $x_1$, $y_1$, $x_2$, $y_2$ values to correct the position it has received. Additionally/alternatively, rather than being used to correct a position value, the $x_1$, $y_1$, $x_2$, $y_2$ values could be used to trigger a warning/error state or provide an indication of the relative tilt and/or lateral/radial position (e.g. eccentricity) of the stator and rotor. For instance, the indication could be a visual indication such that an installer can see whether the stator and rotor are properly configured. Optionally, an error signal could be produced if the $x_1$, $y_1$, $x_2$, $y_2$ values are indicative of relative tilt/lateral position (e.g. eccentricity) above a predetermined threshold. Optionally, such error signal could be used to control the machine the inductive rotary encoder is installed in a predetermined manner (e.g. cause the machine to shut down on receipt of such an error signal).

As is apparent from the above description, in the particular embodiment described the outer quadrant coils are primarily sensitive to and used to determine relative tilt of the rotor 200 and stator 300, whereas the inner quadrant coils are primarily sensitive to and used to determine relative lateral/radial position (e.g. eccentricity) of the rotor 200 and stator 300. As will be understood, this need not necessarily be the case, and for instance the outer quadrant coils could be configured such that they are primarily sensitive to and used to determine relative lateral/radial position (e.g. eccentricity) of the rotor 200 and stator 300, whereas the outer quadrant coils could be configured such that they are primarily sensitive to and used to determine relative lateral/radial position (e.g. eccentricity) of the rotor 200 and stator 300. Furthermore, in other embodiments, one or both of the outer and inner quadrant coils could be sensitive to both relative tilt and lateral/radial position (e.g. eccentricity) of the rotor 200 and stator 300. Whilst it would still be possible to distil relative tilt and lateral/radial position (e.g. eccentricity) measurements from such quadrant coils, this requires more complicated electronics and/or processing, and so it can be preferred that one of the inner and outer quadrant coils is primarily sensitive to relative tilt of the rotor and stator, and the other of the inner and outer quadrant coils is primarily sensitive to relative lateral/radial position (e.g. eccentricity) of the rotor and stator. In other embodiments, only one set of quadrant coils is provided. In such a case, the only one set of quadrant coils could be configured to be primarily sensitive to and used to determine the relative lateral/radial position (e.g. eccentricity) of the rotor 200 and stator 300, or could be configured to be primarily sensitive to and used to determine relative tilt of the rotor 200 and stator 300. In an optional embodiment, the only one set of quadrant coils could be configured to be sensitive to both relative tilt and lateral/radial position (e.g. eccentricity). Whilst it might not be possible to distil the measurements of the relative tilt and lateral/radial position (e.g. eccentricity) of the stator and rotor from only one set of quadrant coils that is sensitive to both relative tilt and lateral/radial position (e.g. eccentricity), the output from such a set of quadrant coils could still be useful to determine the presence of relative tilt and/or lateral/radial position (e.g. eccentricity). For instance, the output therefrom could be used during installation/setup and/or during operation to indicate/determine whether the rotor and stator are relatively tilted/eccentrically arranged which can be used as a warning that they are not setup/configured properly (e.g. it can serve as a go/no-go signal).

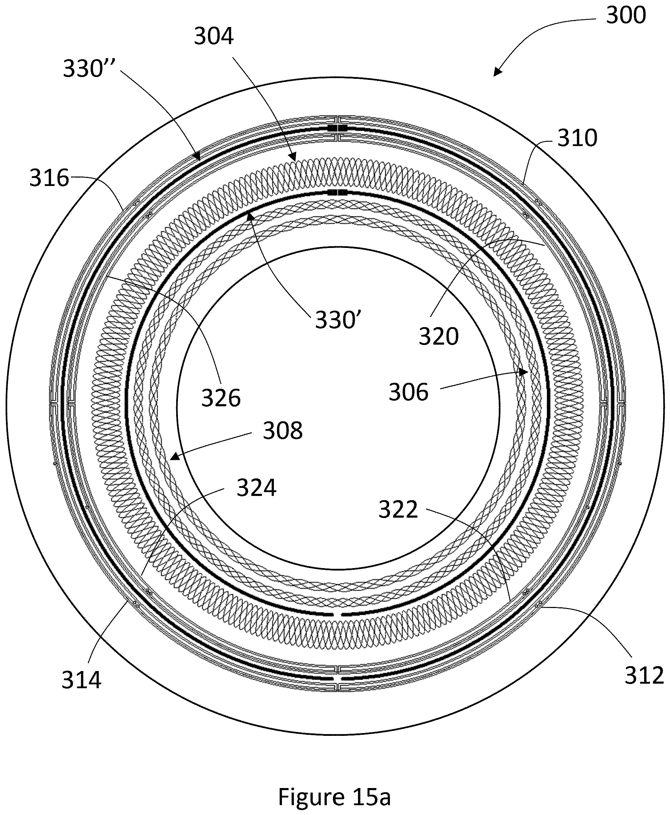

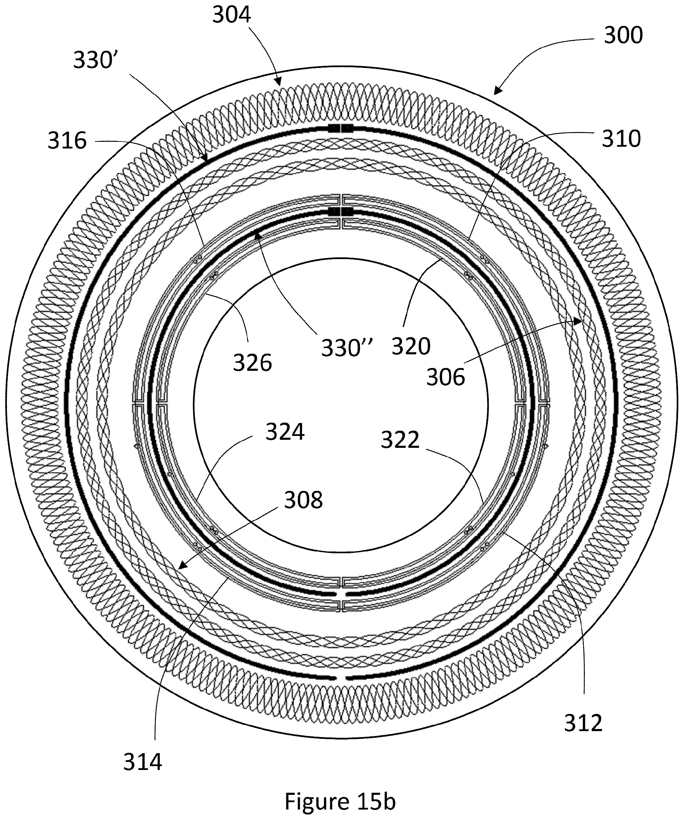

In the embodiments described above, the magnetic field sensed by the quadrant coils is generated by the same excitation coil as that which generates the magnetic field that is sensed by the stator's receiver coils 304, 306, 308. However, this need not necessarily be the case. For instance, Figures 15(a) and (b) illustrate alternative embodiments in which the stator comprises first 330' and second 330" excitation coils that are radially separated from each other. In these embodiments, the first excitation coil 330' generates a magnetic field that is manipulated by the rotor's scale tracks 204, 206, 208 and sensed by the stator's receiver coils 304, 306, 308. The second excitation coil 330" generates a magnetic field that is sensed by the quadrant coils 310, 312, 314, 316, 320, 322, 324, 326 to determine relative tilt and/or the lateral/radial position (e.g. eccentricity) of the rotor 300 and stator 200. As will be understood, in this embodiment, the stator 200 will comprise one or more conductive features configured to manipulate the magnetic field generated by the second excitation coil 330', in the regions of the quadrant coils, such that the outputs of the quadrant coils vary dependent on relative tilt and/or lateral position (e.g. eccentricity) of the stator 300 and rotor 200.

In the embodiments described above, the quadrant coils have been described in connection with detecting/determining the relative tilt and/or lateral/radial position (eccentricity) of the stator and/or rotor. As will be understood, the output of the quadrant coils can also be used to detect/determine surface flatness and/or non-circularity of the rotor . As will also be understood, in another embodiment, additionally or alternatively to the above described functionality, the apparatus could be configured to determine a measure of (or at least a signal indicative of) the axial separation of the stator and rotor members, e.g. via the signal strengths/amplitude of one or more of: i) any one or more of the quadrant coils; and ii) any one or more of the receiver coils.

As will be understood, the above-described particular radial positions of the scale tracks 204, 206, 208 and the corresponding excitation 330 and scale receiver coils 304, 306, 308 are not essential and could be arranged to have different radial positions/combinations. For instance, the rotor 200 could be configured such that the first scale track 204 sits radially between the second 206 and third 208 scale tracks (and therefore the stator 300 could be configured such that the corresponding first receiver coil 304 sits radially between the second 306 and third 308 scale receiver coils).

**Claims**

1. An apparatus comprising an inductive rotary encoder comprising first and second members relatively rotatable about an axis of rotation, the first member having at least first, second and third scale tracks, and the second member having at least one excitation coil for generating a magnetic field, the second member also having a first receiver coil arranged to sense a magnetic field as manipulated by the first scale track, a second receiver coil arranged to sense a magnetic field as manipulated by the second scale track, and a third receiver coil arranged to sense a magnetic field as manipulated by the third scale track, configured such that at least three separate signal channels can be derived from said at least first, second and third receiver coils, wherein the signals of the at least three separate signal channels vary periodically with relative rotation of the first and second members about the axis of rotation, and configured such that for each angle of relative rotation of the first and second members about the axis of rotation, the signal phases of the at least three separate signal channels have a unique combination.

2. An apparatus as claimed in claim 1, in which the first, second and third scale tracks each comprise a periodic arrangement of scale features, the periods of the first, second and third scale tracks being different to each other.

3. An apparatus as claimed in claim 2, in which the first, second and third scale tracks are configured such that the only common integer factor of the period count of said first, second and third scale tracks is 1.

4. An apparatus as claimed in any preceding claim, in which the number of excitation coils is fewer than the number of scale tracks and/or the number of receiver coils.

5. An apparatus as claimed in any preceding claim, in which a receiver coil comprises a differential coil.

6. An apparatus as claimed in any preceding claim, in which each of the first, second and third receiver coils comprises a pair of phase-shifted coils, such that each of the first, second and third receiver coils provides at least a pair of phase-shifted signals.

7. An apparatus as claimed in any preceding claim in which the at least three scale tracks are centred on and extend annularly around a scale track axis, the at least one excitation coil is centred on and extend annularly around an excitation coil axis, and the first, second and third receiver coils are centred on and extend annularly around a receiver coil axis, and wherein the apparatus is configured such that the scale track axis, the excitation axis, and the receiver axis are substantially parallel to each other, and optionally coincident with each other.

8. An apparatus as claimed in any preceding claim, in which at least one of the first and second members comprises a magnetic flux increaser within which a current flow is generated by the or another excitation coil's magnetic field, and which in turn itself generates a magnetic field which acts to increase, in the region of the first, second and third receiver coils, the magnetic flux of the magnetic field sensed by the first, second and third receiver coils.

9. An apparatus as claimed in claim 8, in which the excitation coil which generates the magnetic field which generates the current flow in the magnetic flux increaser is the same excitation coil which generates the magnetic field which is manipulated by the first, second and third scale tracks and which is sensed by the first, second and third receiver coils.

10. An apparatus as claimed in claim 8 or 9, in which the magnetic flux increaser comprises:

 at least one conductor located radially outside of the first member's scale track and the second member's receiver and excitation coils, said at least one conductor being hereinafter referred to as at least one "outer" conductor; and/or
 at least one conductor located radially inside of the first member's scale features and the second member's receiver and excitation coils, said at least one conductor being hereinafter referred to as at least one "inner" conductor.

Figure 1

Figure 2

200

210

204

206

208

203

212

B

y

x

z

Figure 3

Figure 4

Figure 5

Figure 6

Figure 7

Figure 8

Figure 9

Figure 10

magnetic field envelope

330

324/326

300

B/D

320/322

magnetic flux lines

200

208

208 (eccentricity)

ε

magnetic field envelope

330

z

x/y

Figure 11(a)

magnetic field envelope

330

324/326

300

D_B

320/322

200

208

208 (eccentricity)

ε

magnetic field envelope

330

z

x/y

Figure 11(b)

Figure 12(a)

(eccentricity)
Figure 12(b)

Figure 12(c)

Figure 13

Figure 14(a)

Figure 14(b)

Figure 15a

Figure 15b

Europäisches
Patentamt

European
Patent Office

Office européen
des brevets

**EUROPEAN SEARCH REPORT**

Application Number

EP 23 27 5159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 886 519 A (MASRELIEZ KARL G [US] ET AL) 23 March 1999 (1999-03-23) * column 9, line 3 - column 24, line 8; figures 1-10 * | 1-3,5-10 | INV. G01D5/20 G01D5/244 |
| X | EP 4 170 289 A1 (HEIDENHAIN GMBH DR JOHANNES [DE]) 26 April 2023 (2023-04-26) * paragraph [0027] - paragraph [0045]; figures 1-6 * | 1,2,4-6 | |
| X | EP 2 851 655 A1 (HEIDENHAIN GMBH DR JOHANNES [DE]) 25 March 2015 (2015-03-25) * paragraph [0001] * * paragraph [0013] * * paragraph [0044] - paragraph [0052]; figures 6-9 * | 1,2,5 | |
| A | DE 10 2011 110026 A1 (HYDROMETER GMBH [DE]) 14 February 2013 (2013-02-14) * paragraph [0029] * | 8-10 | |

TECHNICAL FIELDS
SEARCHED (IPC)

G01D

The present search report has been drawn up for all claims

| Place of search | Date of completion of the search | Examiner |
|---|---|---|
| Munich | 11 April 2024 | Lyons, Christopher |

EPO FORM 1503 03.82 (P04C01)

# EP 4 553 454 A1

## ANNEX TO THE EUROPEAN SEARCH REPORT
## ON EUROPEAN PATENT APPLICATION NO.

EP 23 27 5159

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | | Publication date | Patent family member(s) | | Publication date |
|---|---|---|---|---|---|
| US 5886519 | A | 23-03-1999 | JP | 3169212 B2 | 21-05-2001 |
| | | | JP | H10213408 A | 11-08-1998 |
| | | | US | 5886519 A | 23-03-1999 |
| EP 4170289 | A1 | 26-04-2023 | CN | 116026231 A | 28-04-2023 |
| | | | DE | 102022208112 A1 | 27-04-2023 |
| | | | EP | 4170289 A1 | 26-04-2023 |
| | | | EP | 4174443 A1 | 03-05-2023 |
| | | | JP | 2023064052 A | 10-05-2023 |
| | | | US | 2023129608 A1 | 27-04-2023 |
| EP 2851655 | A1 | 25-03-2015 | DE | 102013218768 A1 | 19-03-2015 |
| | | | EP | 2851655 A1 | 25-03-2015 |
| | | | ES | 2572532 T3 | 01-06-2016 |
| | | | JP | 6400385 B2 | 03-10-2018 |
| | | | JP | 2015059934 A | 30-03-2015 |
| DE 102011110026 A1 | | 14-02-2013 | NONE | | |

EPO FORM P0459

For more details about this annex : see Official Journal of the European Patent Office, No. 12/82

34